# EUROPÄISCHE PATENTSCHRIFT

(11) **EP 1 357 359 B1**
(45) Veröffentlichungstag und Bekanntmachung des Hinweises auf die Patenterteilung: **23.06.2010**
(21) Anmeldenummer: 03006500.7
(22) Anmeldetag: 21.03.2003
(51) Int. Cl.: G01C 21/36, G08G 1/0969

(54) **Navigationssystem und Verfahren zur Routenbestimmung**
Navigation device and method for route planning
Dispositif et méthode pour guidage routier

(30) Priorität: 24.04.2002 DE 10218340
(43) Veröffentlichungstag der Anmeldung: 29.10.2003
(73) Patentinhaber: Continental Automotive GmbH, 30165 Hannover (DE); Bayerische Motoren Werke Aktiengesellschaft, 80809 München (DE)
(72) Erfinder: Maier, Theo, 81377 München (DE); Völkel, Andreas, 35619 Braunfels (DE)

(56) Entgegenhaltungen:
- EP-A- 1 186 866
- WO-A-02/21078
- DE-A- 10 029 198
- US-B1- 6 188 955

## Beschreibung

Die Erfindung betrifft ein Verfahren zur Bestimmung einer Route für ein Kraftfahrzeug zwischen einem ersten und einem zweiten Ort mittels einer Routenberechungseinrichtung, insbesondere einem Kraftfahrzeugnavigationssystem, mit einer optischen Ausgabeeinheit zur Darstellung einer Karte. Weiterhin betrifft die Erfindung ein Navigationssystem eines Kraftfahrzeuges mit einer Recheneinheit zur Berechnung einer Route zwischen einem ersten und einem zweiten Ort anhand von Kartendaten, einer mit der Recheneinheit verbundenen Eingabeeinheit, einer mit der Recheneinheit verbundenen optischen Ausgabeeinheit, auf der eine Landkarte, die den ersten und den zweiten Ort enthält, darstellbar ist.

Ein derartiges Navigationssystem ist hinreichend bekannt und wird auch kommerziell von mehreren Anbietern angeboten. Beispielhaft sei das von der Siemens VDO AG angebotene Navigationssystem VDO Dayton MS 5000 genannt. Mit dem bekannten Navigationssystem wird eine Route zwischen einem Startort und einem Zielort anhand von im Fahrzeug mitgeführten Kartendaten bestimmt. Die berechnete Route kann auf einem Bildschirm angezeigt werden. Als Startort wird der aktuelle Standort des Fahrzeuges automatisch anhand von empfangenen Satellitensignalen des GPS-Systems bestimmt. Der gewünschte Zielort muß vom Fahrer eingegeben oder ausgewählt werden.

Aus der WO 02/21078 A2 ist ein System zum Ermitteln einer Route bekannt. Ein Nutzer des Systems kann von dem System Anweisungen zum Reisen von einem ersten Ort zu einem zweiten Ort erhalten. Der Nutzer kann beispielsweise einen Zielort eingeben. Alternativ oder zusätzlich kann von dem System eine Position des Nutzers ermittelt werden. Zusätzlich kann der Nutzer einen Zielort vorgeben. Das System ermittelt dann abhängig von dem Startort und dem Zielort eine Route. Ferner kann ein Routenkorridor vorgegeben werden, innerhalb dessen sich die ermittelte Route befinden soll.

Aus der DE 100 29 198 A1 ist ein Verfahren zur Auswahl von Karteninformationen bekannt. Die Karteninformationen werden aus einer digitalen Karte gewonnen. Dabei wird von einem vorgegeben Polygonzug auf der digitalen Karte ausgegangen. Die Karteninformationen umfassen zusätzlich zu den durch den Polygonzug definierten Informationen in Abhängigkeit wenigstens eines Parameters einen Routenkorridor.

Aus der US 6,188,955 B1 ist ein Verfahren zum Speichern, Aufrufen und Verarbeiten von Navigations- und grafischen Daten bekannt, das eine Dreilevelhierarchie verwendet. Eine Streckenlänge wird ermittelt, indem ein Fahrer eine Vielzahl von Variablen in ein entsprechendes Navigationsgerät eingibt. Diese Variablen umfassen kartografische Daten und einen Zielort. Zusätzlich können weitere Variablen eingegeben werden. Beim Erhalten der Eingaben des Fahrers implementiert das Navigationssystem zum Speichern, Aufrufen und Verarbeiten der kartografischen Daten die Dreilevelhierarchie. Nachdem die kartografischen Daten auf einem Speichermedium gespeichert sind kann das Navigationssystem die Streckenlänge berechnen. Die Dreilevelhierarchie umfasst unter anderem eine Netzwerkhierarchie. Falls ein Startort und der Zielort in unterschiedlichen Netzwerken der Netzwerkhierarchie liegen, so muss ein Nutzer des Navigationssystems einen Knoten, der eine Straßenkreuzung darstellt, auswählen, so dass das Navigationssystem die Route Netzwerk-übergreifend ermitteln kann.

Bei dem bekannten Navigationssystem MS 5000 sind verschiedene Zieleingabearten möglich. Bei der direkten Zieleingabe ist zumindest ein Ortsname einzugeben, wonach die Zielführung dann bis zur Orts- bzw. Stadtgrenze erfolgt. Für eine genauere Zielführung können darüber hinaus der Straßenname und gegebenenfalls eine Hausnummer eingegeben werden.

Eine weitere Zieleingabeart ist die Auswahl aus einer Listenanzeige. Hierbei werden nach Eingabe eines ersten Buchstabens alle Zielorte aufgelistet, deren Namen mit diesem Buchstaben beginnt. Durch die Eingabe des zweiten, dritten oder eines weiteren Buchstabens kann die Auswahlliste verkleinert werden. Mittels eines Cursors wird der gewünschte Listeneintrag aus der Liste ausgewählt.

Bei einer dritten Zieleingabeart kann eine Zieladresse aus einem Adressbuch oder einem Zielspeicher ausgewählt werden, in dem beispielsweise die Zieladressen der letzten zehn eingegebenen Ziele aufgelistet sind. Die Adressauswahl ist hierbei auf Adressen beschränkt, die für den Benutzer von besonderer Bedeutung sind oder in letzter Zeit von ihm angefahren wurden. Die Auswahl erfolgt letztlich wieder anhand einer Liste mittels eines Cursors.

Eine vierte Eingabeart ist die Auswahl des Zieles anhand einer Zieleingabekarte. Hierbei wird auf dem Monitor eine Karte sowie ein Fadenkreuz angezeigt. Das Fadenkreuz kann mit den Cursortasten einer Eingabeeinheit über die Karte bewegt und auf diese Weise ein Ziel ausgewählt werden. Die Zielpositionierung muß hierbei möglichst genau erfolgen. So ist beispielsweise bei Zielpositionierung auf Autobahnen auf die richtige Fahrbahnseite zu achten.

Bei dem Navigationssystem MS 5000 können zusätzlich weitere sogenannte Wegpunkte oder Zwischenziele abgespeichert werden, die angefahren werden sollen. Das Navigationssystem plant dann die Route so, dass die Wegpunkte der Reihe nach angefahren werden, bevor die Zieladresse erreicht wird. Die Eingabe von Wegpunkten erfolgt in der gleichen Weise wie die Eingabe von Zieladressen. Hinsichtlich der Zieleingabe über die Zieleingabekarte bedeutet dies, dass auch die Wegpunkte oder Zwischenziele punktgenau eingegeben werden und wie oben bereits erwähnt beispielsweise auf die richtige Fahrbahnseite bei Autobahnen zu achten ist.

Die graphische Eingabe von Zwischenzielen über die Zieleingabekarte kann dazu benutzt werden, eine bevorzugte Wegführung auszuwählen. Nachteilig bei diesem Verfahren ist jedoch, dass nur exakte Zwischenziele ausgewählt werden können und die Wegführung dann genau über dieses exakte Zwischenziel erfolgt. Bevorzugt beispielsweise ein Benutzer für die Fahrt von München nach Frankfurt anstelle der Autobahn über Nürnberg die alternative Routenführung über Stuttgart, so muss der Benutzer genau einen Wegpunkt exakt auswählen, der auf der von ihm gewünschten Route liegt. Dies kann beispielsweise ein bestimmtes Autobahnkreuz sein. Dabei muss der Benutzer hier noch zusätzlich darauf achten, dass er die richtige Fahrbahnseite an diesem gewählten Autobahnkreuz auswählt. Hierzu ist bereits eine sehr genaue Kenntnis der bevorzugten Route erforderlich. Zudem ist die exakte Auswahl eines Zwischenziels anhand der Zieleingabekarte jedoch auch umständlich, da für die genaue Positionierung des Fadenkreuzes ein Wechsel zu einem entsprechenden Kartenmaßstab erforderlich ist.

Hier setzt nun die vorliegende Erfindung an, deren Aufgabe es ist, ein Verfahren zur Routenbestimmung für Kraftfahrzeuge zur Verfügung zu stellen, das benutzerfreundlich die Beeinflussung des Routenverlaufs erlaubt. Die Aufgahe wird durch ein Verfahren gemäß Anspruche gelöst. Eine weitere Aufgabe der Erfindung besteht darin, ein gattungsgemäßes Navigationssystem derart weiterzubilden, dass es auf einfache Weise die Beeinflussung des Routenverlaufs durch die Grobauswahl von Zwischenzielen erlaubt. Diese Aufgabe wird durch ein Navigationssystem gemäß Anpruch 12 gelöst.

Bei bekannten Verfahren wird nach Eingabe eines Zwischenziels zum Zwecke der Beeinflussung der Routenführung zunächst eine Route zwischen dem Startort und dem exakt eingegebenen Zwischenziel berechnet. Eine derartige Routenberechnung zwischen dem Startort und dem Zwischenziel unterscheidet sich nicht von einer Routenberechnung zwischen einem Start- und einem Zielort. In einem zweiten Berechnungsschritt wird schließlich die Route zwischen dem exakt eingegebenen Zwischenziel und dem endgültigen Zielort berechnet.

Die Erfindung geht hier einen anderen Weg. Auf einer optischen Ausgabeeinheit wird neben der Karte ähnlich wie bei dem bekannten Navigationssystem eine verschiebbare Markierung angezeigt. Mittels der verschiebbaren Markierung kann der Benutzer nun einen Wegpunkt wählen. Im Gegensatz zum bekannten Verfahren, bei dem die Zielführung stets über das exakt ausgewählte Zwischenziel erfolgt, dient bei dem erfindungsgemäßen Verfahren die Wahl eines Wegpunktes durch die verschiebbare Markierung zur Festlegung eines bevorzugten Routenkorridors, wobei der bevorzugte Routenkorridor die Position der verschiebbaren Markierung einschließt. Anschließend erfolgt eine Routenberechnung zwischen dem Startort und dem Zielort, wobei eine Route innerhalb des bevorzugten Routenkorridors bei der Routenberechnung bevorzugt wird.

Der Vorteil dieses Verfahrens besteht im Wesentlichen darin, dass die Eingabe eines Wegpunktes auf einfache Art graphisch interaktiv erfolgt. Insbesondere ist es nicht erforderlich, den Eingabemaßstab so weit zu verändern, dass ein Wegpunkt exakt eingegeben werden kann. Ein weiterer Vorteil besteht darin, dass die Wegführung nicht genau über den exakt eingegebenen Wegpunkt erfolgen muß, sondern beispielsweise unter Berücksichtigung von Verkehrsinformationen die Routenplanung frei erfolgen kann.

Am Beispiel der eingangs bereits erwähnten Routenführung von München nach Frankfurt über Stuttgart wählt der Benutzer mit der Markierung auf der optischen Ausgabeeinheit Stuttgart als Wegepunkt. Hierdurch wird ein bevorzugter Routenkorridor zwischen München und Stuttgart und Stuttgart und Frankfurt aufgespannt. Dies hat den Vorteil, dass bei Verkehrsbehinderungen in Großraum Stuttgart zwar eine Route über Stuttgart gewählt werden kann, die jedoch die gemeldeten Verkehrsbehinderung umgeht.

Die Festlegung eines bevorzugten Routenkorridors kann, wenn die Karte Straßensegmente enthält, denen vorgegebene Widerstandswerte zugeordnet sind, derart erfolgen, dass die Widerstandswerte von Straßensegmenten innerhalb des bevorzugten Routenkorridors für die Routenberechnung verringert werden.

Üblicherweise enthalten digitale Landkartendaten für Navigationssysteme Straßensegmente, denen Widerstandswerte zugeordnet sind. Der Widerstandswert eines solchen Segments kann beispielsweise die Streckenlänge des Segments, die erzielbare Maximalgeschwindigkeit auf dem Streckensegment und dergleichen berücksichtigen. Bei der Routenberechnung wird dann beispielsweise diejenige Route ausgewählt, deren Straßensegmente den niedrigsten Gesamtwiderstand ergeben.

Durch die Reduzierung der Widerstandswerte von Straßensegmenten, die innerhalb des bevorzugten Routenkorridors liegen, werden diese Straßensegmente bei der Routenberechnung bevorzugt. Hierdurch ergibt sich eine höhere Wahrscheinlichkeit, dass die berechnete Route innerhalb des gewählten Routenkorridors liegt. Über den Verringerungsfaktor zur Verringerung des Widerstandswertes kann diese Wahrscheinlichkeit beeinflußt werden.

Insbesondere ist daher vorgesehen, dass der Faktor für die Verringerung des Widerstandswertes von Straßensegmenten innerhalb des bevorzugten Routenkorridors wählbar ist. Hierdurch kann ein Benutzer dem Navigationssystem mitteilen, wie wichtig es ihm ist, dass die berechnete Route innerhalb des bevorzugten Routenkorridors verläuft. Wünscht der Benutzer beispielsweise eine Route über einen bestimmten Wegpunkt, da ihm diese landschaftlich attraktiver erscheint als eine andere Route, so kann er durch Wahl eines entsprechenden Verringerungsfaktors für eine große Verringerung der Widerstandswerte sicherstellen, dass die Route auch dann über den von ihm gewählten Wegpunkt verläuft, wenn eine andere Route deutlich kürzer ist. Andererseits kann ein Benutzer, der eine Alternativroute über einen von ihm gewählten Wegpunkt nur dann wünscht, wenn die Fahrtdauer nur unwesentlich länger ist als bei einer anderen Route einen Wert für den Verringerungsfaktor wählen, der nur eine geringe Verringerung der Widerstandswerte bewirkt.

In einer besonderen Ausführungsform ist vorgesehen, dass zunächst eine geradlinige Verbindungslinie zwischen dem ersten und dem zweiten Ort auf der optischen Ausgabeeinheit dargestellt wird, die die Markierung enthält und durch Verschieben der Markierung verformbar ist. Mit der geradlinigen Verbindungslinie wird die Luftlinienverbindung zwischen dem Startund dem Zielort angezeigt. Der Benutzer hat dann die Möglichkeit, eine Markierung entlang der Luftlinienverbindung zu wählen und durch Verschieben dieser Markierung die Luftlinienverbindungslinie zu verformen. Insbesondere kann die Verformung der Verbindungslinie derart erfolgen, dass eine erste geradlinige Teillinie zwischen dem ersten Ort und der Markierung sowie eine zweite gradlinige Teillinie zwischen der Markierung und dem zweiten Ort aufgespannt wird. Dies entspricht anschaulich dem Aufspannen eines beidseitig befestigten Gummibandes durch Ziehen am Gummiband. Alternativ können die Teillinien jedoch auch gekrümmt sein. Der bevorzugte Routenkorridor umfaßt dann ein geographisches Gebiet um die beiden Teillinien.

Insbesondere ist vorgesehen, dass der bevorzugte Routenkorridor ein geographisches Gebiet umfaßt, das symmetrisch zu den Teillinien verlaufende Begrenzungslinien aufweist. Hierdurch werden gleich breite geographische Bereiche zu beiden Seiten der Teillinien aufgespannt. Bevorzugt werden insbesondere Begrenzungslinien, die im wesentlichen parallel in einem vorgegebenen Abstand zu den Teillinien verlaufen. Hierdurch wird zu jeder Teillinie ein rechteckförmiges geographisches Gebiet aufgespannt, das den bevorzugten Routenkorridor bildet.

In einer besonderen Ausführungsform ist vorgesehen, dass der Abstand zwischen den parallel zu den Teillinien verlaufenden Begrenzungslinien des bevorzugten Routenkorridors wählbar ist. Bei dieser Ausgestaltung ist somit die Breite des Korridors wählbar. Hierdurch werden die Einflußmöglichkeiten des Benutzers auf die Routenwahl erhöht. Wenn die Breite des Routenkorridors auf der optischen Ausgabeeinheit dargestellt wird, ergibt sich eine besonders einfache optische Rückmeldung an den Benutzer bei der Einstellung der Breite des Routenkorridors.

Durch die Markierung werden Teilroutenkorridore aufgespannt, die beispielsweise als zwei rechteckförmige Routenkorridore an der Markierung zusammenstoßen. Um den Verlauf des Routenkorridors um die Markierung herum weiter zu beeinflussen, ist in einer besonderen Ausführungsform vorgesehen, dass der bevorzugte Routenkorridor ein kreisförmiges geographisches Gebiet um die Markierung umfaßt. Liegt die Markierung beispielsweise in einem Ballungsraum, so kann durch das kreisförmige geographische Gebiet um die Markierung erreicht werden, dass der bevorzugte Routenkorridor Straßen am Rande des Ballungsgebietes einschließt, die ansonsten nicht innerhalb des bevorzugten Routenkorridors liegen würden.

Die Dimensionen der Routenteilkorridore, das heißt deren Breite bzw. der Radius der Kreisfläche um die Markierung, können aus den geometrischen und geographischen Verhältnissen, wie den Streckenlängen, automatisch bestimmt werden. Durch die optionale Möglichkeit zur einfachen Justierung der Abmessungen der Routenkorridore wird dem Benutzer ein gewisser Freiheitsgrad innerhalb der geometrischen Grenzen gegeben.

Durch die Verformung auch einer Teillinie kann eine weitere Optimierung des gewünschten Routenkorridors erreicht werden. Beispielsweise kann ein Polygon mit beispielsweise bis zu 5 Punkten aufgespannt werden.

Sofern die Recheneinheit eine ausreichende Leistung zur Verfügung stellt, kann die Auswahl eines bevorzugten Routenkorridors direkt mit der in der Karte eingezeichneten Route beantwortet werden. Hierbei kann aus Sicht des Benutzers zunächst mit einer Standardroute begonnen werden und durch Verformung der Verbindungslinie zwischen dem Start- und Zielort direkt zwischen verschiedenen Alternativrouten gewechselt werden.

Ein gattungsgemäßes Navigationssystem ist erfindungsgemäß dadurch gekennzeichnet, dass das Navigationsgerät Mittel zur Auswahl eines bevorzugten Routenkorridors aufweist. Insbesondere ist der bevorzugte Routenkorridor mittels der Eingabeeinheit durch Verschieben der auf der Anzeigeeinheit angezeigten Markierung bestimmbar.

In einer besonderen Ausführungsform weist das Navigationssystem eine kombinierte Ein-/Ausgabeeinheit auf, die vorzugsweise als berührungsempfindlicher Bildschirm (Touchscreen)ausgebildet ist. Bei einer solchen Ausgestaltung kann der Benutzer direkt durch Berühren des Bildschirms mit dem Finger die Markierung an die gewünschte Stelle verschieben.

Die Erfindung wird nachfolgend anhand eines Ausführungsbeispiels und der Zeichnung näher erläutert. Es zeigen:
- Fig.1:: die wesentlichen Komponenten eines Navigationssystems;
- Fig. 2 und 3:: Bildschirmdarstellungen zur Erläuterung zur Festlegung von Teillinien;
- Fig. 4 und 5:: Bildschirmdarstellungen mit Anzeige eines bevorzugten Routenkorridors;
- Fig. 6: ein Ablaufdiagramm.

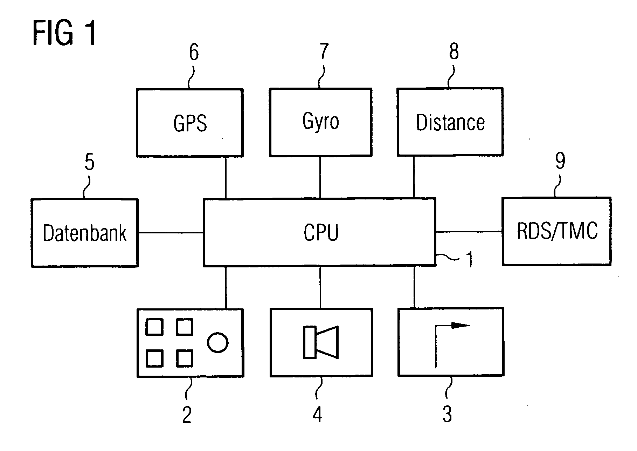

In Fig. 1 sind die Komponenten eines Navigationssystems für Kraftfahrzeuge schematisch dargestellt. Zentraler Bestandteil des Navigationssystems ist die Recheneinheit (CPU) 1, die auch die erforderlichen Speicherelemente enthält. Mit der CPU 1 ist eine Bedieneinheit 2 verbunden, über die beispielsweise der Zielort eingegeben oder ausgewählt werden kann. Die Bedieneinheit 2 enthält dazu unter anderem ein oder mehrere Bedienelemente zur Steuerung eines Cursors. Die Bedieneinheit 2 kann im gleichen Gehäuse wie die CPU 1 untergebracht sein, jedoch kann die Bedieneinheit 2 auch als Fernbedienung ausgebildet sein, die mit der CPU 1 beispielsweise über eine optische Schnittstelle oder eine Funkschnittstelle in Verbindung steht.

Mit der CPU 1 ist eine optische Ausgabeeinheit 3 verbunden, über die eine Kartendarstellung und Zielführungsinformationen sowie sonstige Informationen ausgegeben werden können. Die Zielführungsinformationen können weiterhin über einen Lautsprecher 4 akustisch ausgegeben werden.

Die CPU 1 ist ferner mit einer Datenbank 5 verbunden, die die Landkartendaten enthält. Diese Daten sind beispielsweise auf einer CD-ROM oder einer DVD abgespeichert. In diesem Falle enthält das Navigationssystem ein CD-ROM bzw. DVD-Laufwerk, das mit der CPU 1 verbunden ist. Anhand der Landkartendaten kann von der CPU 1 bei bekanntem Start- und Zielort in bekannter Weise eine Berechnung der optimalen Route durchgeführt werden, die dann über die optische Ausgabeeinheit 3 ausgegeben werden kann.

Zur Bestimmung der aktuellen Fahrzeugposition enthält das Navigationssystem ferner einen Empfänger 6 zum Empfang von Satellitennavigationssignalen. Um eine von Satelliten unabhängige Positionsbestimmung durchführen zu können, enthält das Navigationssystem ferner einen Richtungssensor 7 und einen Wegsensor 8, die ebenfalls mit der CPU 1 verbunden sind, so dass mit Hilfe eines geeigneten Computerprogrammes mit diesen Signalen eine Positionsbestimmung möglich ist.

Ferner ist die CPU 1 im dargestellten Beispiel zusätzlich mit einem Rundfunkempfänger 9 verbunden, der zum Empfang von RDS-TMC-Signalen ausgebildet ist. Somit können empfangene Verkehrsinformationen vom Rundfunkempfänger 9 an die CPU 1 weitergeleitet und zur Berücksichtigung bei der Routenberechnung herangezogen werden. Alternativ können Verkehrsinformationen auch über ein Mobilfunkgerät, insbesondere nach dem GSM-Standard, empfangen und an die Recheneinheit weitergeleitet werden.

Abweichend von dem beschriebenen Navigationssystem können die Landkartendaten auch über das Mobilfunkgerät von einer zentralen Servicestelle in das Fahrzeug übertragen werden. In diesem Falle kann ein Lesegerät für ein Speichermedium mit den Landkartendaten im Fahrzeug entfallen. Entsprechende Navigationssysteme sind bekannt.

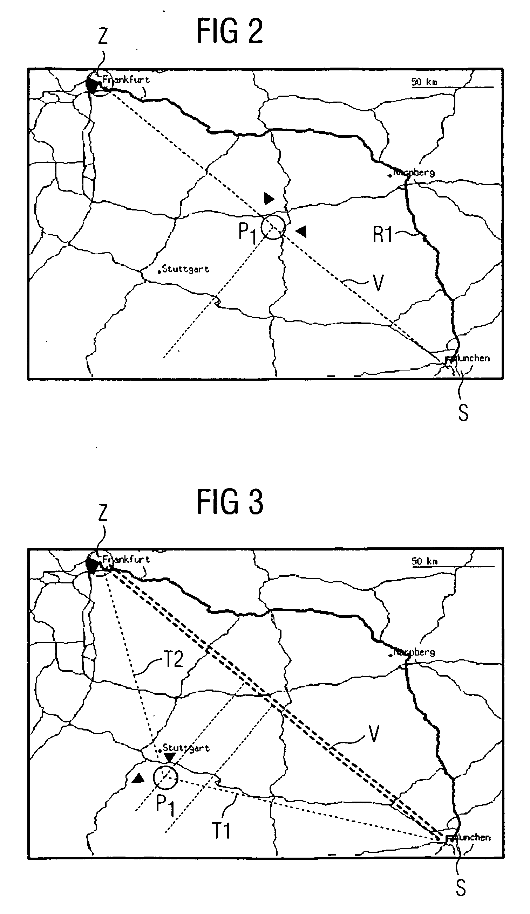

Fig. 2 zeigt eine erste Bildschirmdarstellung auf der optischen Ausgabeeinheit 3. Hierbei handelt es sich um eine Landkartendarstellung, die für ein bestimmtes geographisches Gebiet Teile eines Straßennetzes, hier die Autobahnverbindungen, enthält. Die Landkartendarstellung enthält den Startort S, der dem aktuellen Startort des Fahrzeuges entspricht und durch Satellitennavigationssignale bestimmt wurde. Weiterhin enthält die Landkartendarstellung den ausgewählten Zielort Z. Im dargestellten Beispiel liegt der Standort S innerhalb der Stadt München und der Zielort Z innerhalb der Stadt Frankfurt. Eine geradlinige Verbindungslinie V, die der Luftlinienverbindung zwischen dem Startort S und dem Zielort Z entspricht, wird ebenfalls auf der optischen Anzeigeeinheit dargestellt. Von dem Navigationssystem wird eine erste Route R1 zwischen dem Startort S und dem Zielort Z berechnet und innerhalb der Kartendarstellung auf der optischen Ausgabeeinheit dargestellt.

Der Benutzer hat nun die Möglichkeit, die Routenauswahl zu beeinflussen. Von dem Navigationssystem wurde als Verbindung zwischen dem Startort S und dem Zielort Z eine Autobahnverbindung mit der Route R1 über Nürnberg berechnet. Wie aus der Kartendarstellung ersichtlich ist, ist eine alternative Routenführung über Straßen möglich, die unterhalb der Verbindungslinie V verlaufen. Bevorzugt der Autofahrer eine solche Route, die beispielsweise über Stuttgart führt, so kann der Benutzer des Navigationssystems mittels einer Cursorsteuertaste einen Haltepunkt auf der Verbindungslinie V auswählen. Um diesen Haltepunkt wird eine Markierung P1 angezeigt, die mittels der Cursorsteuertasten der Bedieneinheit verschiebbar ist. Die Markierung P1 kann vom Benutzer senkrecht zur Verbindungslinie V verschoben werden.

Wie in Fig. 3 dargestellt, erfolgt über die Cursorsteuertasten eine Verschiebung der Markierung P1 senkrecht zur Verbindungslinie V. Gleichzeitig wird eine neue erste geradlinige Teillinie T1 zwischen dem Startort S und der Markierung P1 sowie eine zweite geradlinige Teillinie T2 zwischen der Markierung P1 und dem Zielort Z angezeigt. Im Ausführungsbeispiel erfolgt die Verschiebung der Markierung P1 senkrecht zur Verbindungslinie V stets derart, dass ein gleichschenkliges Dreieck durch die Verbindungslinie V, die erste Teillinie T1 und die zweite Teillinie T2 aufgespannt wird, unabhängig davon, welcher Haltepunkt auf der Verbindungslinie V mittels des Cursors ausgewählt wurde.

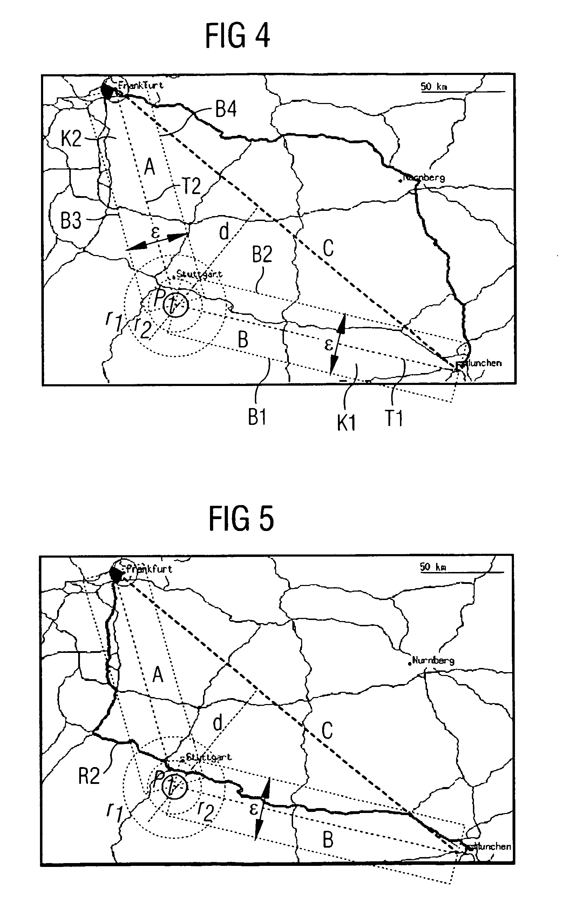

Durch die Teillinien T1 und T2 wird ein bevorzugter Routenkorridor festgelegt, wie dies in Fig. 4 dargestellt ist. Ein erster Teilkorridor K1 umfaßt ein geometrisches Gebiet beidseits der Teillinie T1 und ist durch die seitlichen Begrenzungslinien B1 und B2 begrenzt. Die Länge der Begrenzungslinien B1 und B2 entspricht dabei der Länge der Teillinie T1. Somit wird ein rechteckförmiger Korridor K1 aufgespannt, der die Breite ε aufweist.

In gleicher Weise werden zu der Teillinie T2 Begrenzungslinien B3, B4 festgelegt, die einen rechteckförmigen Korridor K2 begrenzen. Der Korridor K2 weist ebenfalls die Breite ε auf. Die Breite ε kann von dem Benutzer vorgegeben werden. Um die Markierung P1 kann der bevorzugte Korridor in Form eines kreisförmigen Gebietes verringert oder erweitert werden. In Fig. 4 sind hierzu zwei geographische Gebiete mit den Radien r1 bzw. r2 um die Markierung P1 eingezeichnet. Der gesamte bevorzugte Routenkorridor setzt sich dann zusammen aus dem Korridor K1, dem Korridor K2 sowie gegebenenfalls dem ringförmigen geographischen Gebiet um die Markierung B1.

Die Breite ε der Korridore K1, K2 und der Radius r1 bzw. r2 der Kreisfläche um die Markierung P1 werden aus den geometrischen und geographischen Verhältnissen, also der Verbindungslinie V, den Teilstrecken T1, T2 und gegebenenfalls der Höhe d des aufgespannten gleichschenkligen Dreieckes bestimmt.

Optional wird dem Benutzer die Möglichkeit zur einfachen Justierung der Gewichtung gegeben. Hierdurch ist eine gewisse Beeinflussung der Breite des bevorzugten Routenkorridors möglich. Beispielsweise können über einen durch die Benutzer einstellbaren Faktor die Verhältnisse ε/d, r1/ε, r2/r1 in einem gewissen Bereich verändert werden.

Ist die Selektion des bevorzugten Routenkorridors durch den Benutzer abgeschlossen, so werden Straßensegmente, die innerhalb dieses Korridors liegen, mit einem geringeren Widerstand versehen. Dies bedeutet, dass der in der Datenbank abgespeicherte Widerstandswert für ein Straßensegment innerhalb des bevorzugten Korridors um einen bestimmten Faktor verringert wird. Anschließend erfolgt die Routenberechnung mit den nunmehr veränderten Widerstandswerten der Straßensegmente innerhalb des bevorzugten Routenkorridors.

Die Routenberechnung erfolgt in bekannter Weise mittels bekannter Algorithmen derart, dass die berechnete Route zwischen dem Startort S und dem Zielort Z den geringsten Gesamtstreckenwiderstand aufweist. Da die Streckenwiderstände innerhalb des bevorzugten Routenkorridors verringert wurden, steigt die Wahrscheinlichkeit, dass die berechnete Route nunmehr innerhalb des bevorzugten Routenkorridors liegt. Um auch bei extremen Abweichungen des bevorzugten Routenkorridors hinsichtlich der zu erwartenden Streckenlänge von der Strekkenlänge der ursprünglich berechneten Route R1 eine neue Route innerhalb des bevorzugten Routenkorridors zu bekommen, ist optional vorgesehen, dass der Benutzer den Verringerungsfaktor in Grenzen frei wählen kann.

Nach Durchführung der Routenberechnung mit den veränderten Streckenwiderständen von Straßensegmenten innerhalb des bevorzugten Routenkorridors wird eine neue Route R2 auf der Ausgabeeinheit 3 ausgegeben. Wie aus Fig. 5 ersichtlich ist, liegt die Route R2 im wesentlichen innerhalb des berechneten Routenkorridors, kann jedoch teilweise auch außerhalb des Routenkorridors liegen.

Ist der Benutzer mit der gewünschten Route noch nicht einverstanden, so wird ihm die Gelegenheit gegeben, auch die Teilstrecke T1 oder T2 wie zuvor die Verbindungslinie V wie ein Gummiband zu verformen, um den Routenkorridor weiter seinen Bedürfnissen anzupassen.

Durch Verschiebung der Markierung P1 kann der Benutzer das Navigationssystem auch veranlassen, eine neue Route, beispielsweise wieder die ursprüngliche Route R1 anzuzeigen.

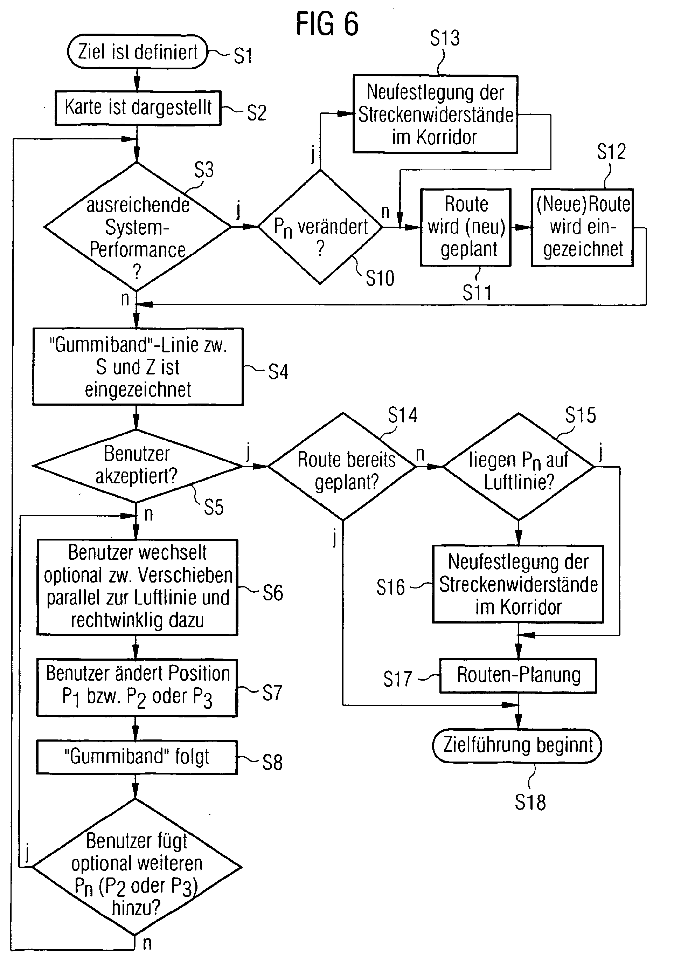

In Fig. 6 ist ein Ablaufdiagramm für das erfindungsgemäße Verfahren dargestellt. In Schritt S1 wird zunächst der Zielort Z definiert. In Schritt S2 wird anschließend eine Darstellung der Karte auf der optischen Ausgabeeinheit durchgeführt. In Schritt S3 werden die Eigenschaften des Navigationsrechners überprüft, um festzustellen, ob dessen Leistung ausreicht, die Selektion eines bevorzugten Routenkorridors direkt mit einer geplanten Route beantworten zu können. Ist dies nicht der Fall, so wird in Schritt S4 die Verbindungslinie zwischen dem Startort S und dem Zielort Z auf der optischen Ausgabeeinheit dargestellt. In Schritt S5 wird geprüft, ob der Benutzer die Vorgaben akzeptiert, also keinen Korridor auswählen möchte oder einen bereits ausgewählten Korridor akzeptiert.

Akzeptiert der Benutzer in Schritt S5 die Vorgabe nicht, so kann er in Schritt S6 optional zwischen einem Verschieben der Markierung parallel zur Luftlinie (Wahl eines Haltepunktes) und rechtwinklig dazu wechseln. In Schritt S7 verschiebt der Benutzer die Position der Markierung innerhalb des dargestellten Landkartenauschnittes auf der optischen Ausgabeeinheit. In Schritt S8 werden die Teillinien T1, T2 aufgespannt. Dies erfolgt wie beim Ziehen an einem eingespannten Gummiband.

In Schritt S9 wird abgefragt, ob der Benutzer optional weitere Markierungspunkte hinzufügen möchte, um die Teillinien T1 oder T2 ebenfalls in Form eines Gummibandes weiter aufzuspannen. Ist dies der Fall, so werden die Schritte S6 bis S9 als Schleife durchlaufen. Ist dies nicht der Fall, so wird vom Navigationssystem der bevorzugte Routenkorridor mit einer Breite ε um die Teillinein T1, T1 festgelegt und das Verfahren mit Schritt S3 fortgesetzt.

In Schritt S3 wird dann erneut abgefragt, ob die Leistung des Systems zur direkten Ausgabe der geplanten Route als Antwort auf die Selektion des bevorzugten Routenkorridors erfolgen kann.

Ist dies der Fall, so wird in Schritt S10 geprüft, ob die Markierung verändert wurde. Ist dies nicht der Fall, so wird in Schritt S11 die Route geplant bzw. neu geplant und in Schritt S12 wird die Route in die Kartendarstellung auf der optischen Ausgabeeinheit eingezeichnet.

Wird dagegen in Schritt S10 festgestellt, dass die Markierung verändert wurde und damit ein neuer bevorzugter Routenkorridor aufgespannt wurde, so erfolgt in Schritt S13 eine Neufestlegung der Streckenwiderstände im bevorzugten Routenkorridor. Anschließend wird in Schritt S11 die Route neu geplant und die neue Route in die Kartendarstellung eingezeichnet (Schritt S12).

Hat der Benutzer in Schritt S5 den bevorzugten Routenkorridor, den er über die Markierung P festgelegt hat, akzeptiert, so wird in Schritt S14 geprüft, ob eine Route für diesen Routenkorridor bereits geplant ist. Ist dies der Fall, so erfolgt in Schritt S18 die Zielführung in an sich bekannter Weise.

Wird dagegen in Schritt S14 festgestellt, dass eine Route nach Festlegung des bevorzugten Routenkorridors noch nicht geplant wurde, so wird in Schritt S15 geprüft, ob die Markierung auf der Verbindungslinie V, das heißt der Luftlinienverbindung zwischen dem Startort S und dem Zielort Z liegt. Ist dies der Fall, so wird in Schritt S17 die Routenplanung durchgeführt und anschließend in Schritt S18 die Zielführung begonnen. Wird in Schritt S15 festgestellt, dass die Markierung nicht auf der Verbindungslinie V liegt, so wird in Schritt S16 eine Neufestlegung der Streckenwiderstände innerhalb des bevorzugten Routenkorridors vorgenommen. Anschließend wird ebenfalls in Schritt S17 die Routenplanung vorgenommen und in Schritt S18 die Zielführung begonnen.

Mit dem erfindungsgemäßen graphisch interaktiven Eingabekonzept wird eine Auswahl zur Verfügung gestellt, mit der der Benutzer den Routenverlauf beeinflussen kann. Ein Navigationssystem, dass dieses Verfahren anwendet, ist leicht bedienbar. Das Verfahren selbst ist durch die optische Ausgabe innerhalb der Kartendarstellung leicht verständlich und durch den Benutzer auch in einfacher Weise überprüfbar.

## Patentansprüche

1. Verfahren zur Bestimmung einer Route für ein Kraftfahrzeug zwischen einem ersten und einem zweiten Ort mittels einer Routenberechungseinrichtung, insbesondere einem Kraftfahrzeugnavigationssystem, mit einer optischen Ausgabeeinheit (3) zur Darstellung einer Karte, wobei
- auf der optischen Ausgabeeinheit (3) eine Karte, die den ersten und den zweiten Ort (S, Z) enthält, sowie eine mittels einer Eingabeeinheit (2) verschiebbare Markierung (P) angezeigt wird,
- ein bevorzugter Routenkorridor (K1, K2) für eine Routenberechnung festgelegt wird, der die Position der verschiebbaren Markierung (P) einschließt,
- die Route (R) zwischen dem ersten und dem zweiten Ort (S, Z) abhängig von dem bevorzugten Routenkorridor (K1, K2) berechnet wird und die Routenberechnung innerhalb des berorzugten Routenkorridors (K1, K2) frei von der Position der verschiebbaren Markierung (P) erfolgt.

2. Verfahren nach Anspruch 1, **dadurch gekennzeichnet, dass** die Karte Straßensegmente enthält, denen vorgegebene Widerstandswerte zugeordnet sind und dass die Widerstandswerte von Straßensegmenten innerhalb des bevorzugten Routenkorridors (K1, K2) für die Routenberechnung verringert werden.

3. Verfahren nach Anspruch 2, **dadurch gekennzeichnet, dass** ein Faktor für die Verringerung des Widerstandswerts wählbar ist.

4. Verfahren nach einem der vorhergehenden Ansprüche, **dadurch gekennzeichnet, dass** der bevorzugte Routenkorridor (K1, K2) zwischen dem ersten Ort (S) und der Markierung (P) sowie dem zweiten Ort (Z) und der Markierung (P) aufgespannt wird.

5. Verfahren nach einem der vorhergehenden Ansprüche, **dadurch gekennzeichnet, dass** zunächst eine geradlinige Verbindungslinie (V) zwischen dem ersten und dem zweiten Ort (S, Z) auf der optischen Ausgabeeinheit (3) dargestellt wird, die die Markierung (P) enthält und durch Verschieben der Markierung (P) verformbar ist.

6. Verfahren nach Anspruch 5, **dadurch gekennzeichnet, dass** die Verformung der Verbindungslinie (V) derart erfolgt, dass eine erste geradlinige Teillinie (T1) zwischen dem ersten Ort (S) und der Markierung (P) sowie eine zweite geradlinige Teillinie (T2) zwischen der Markierung (P) und dem zweiten Ort (Z) aufgespannt wird.

7. Verfahren nach Anspruch 6, **dadurch gekennzeichnet, dass** die Verbindungslinie (V) und die beiden Teillinien (T1, T2) ein gleichschenkliges Dreieck bilden.

8. Verfahren nach einem der Ansprüche 6 oder 7, **dadurch gekennzeichnet, dass** der bevorzugte Routenkorridor (K1, K2) ein geographisches Gebiet umfasst, das symmetrisch zu den Teillinien (T1, T2) verlaufende Begrenzungslinien (B) aufweist.

9. Verfahren nach Anspruch 8, **dadurch gekennzeichnet, dass** der bevorzugte Routenkorridor (K1, K2) ein geographisches Gebiet mit im wesentlichen parallel in einem vorgegebenen Abstand zu den Teillinien (T1, T2) verlaufenden Begrenzungslinien (B) umfasst.

10. Verfahren nach Anspruch 9, **dadurch gekennzeichnet, dass** der Abstand ε zwischen den parallel zu einer Teillinie (T1, T2) verlaufenden Begrenzungslinien (B1, B2; B3, B4) des bevorzugten Routenkorridors (K1, K2) wählbar ist.

11. Verfahren nach einem der vorhergehenden Ansprüche, **dadurch gekennzeichnet, dass** der bevorzugte Routenkorridor (K1, K2) ein kreisförmiges geographisches Gebiet um die Markierung (P) umfasst.

12. Navigationssystem für ein Kraftfahrzeug mit
- einer Recheneinheit (CPU 1) zur Berechnung einer Route zwischen einem ersten und einem zweiten Ort (S, Z) anhand von Kartendaten,
- einer mit der Recheneinheit (CPU 1) verbundenen Eingabeeinheit (2),
- einer mit der Recheneinheit (CPU 1) verbundenen optischen Ausgabeeinheit (3), auf der eine Landkarte, die den ersten und den zweiten Ort (S, Z) enthält, darstellbar ist,
- Mitteln zur Auswahl eines bevorzugten Routenkorridors (K1, K2), wobei der bevorzugte Routenkorridor mittels der Eingabeeinheit (2) durch Verschieben einer auf der Anzeigeeinheit (3) angezeigten Markierung (P) bestimmbar ist und deren Position einschließt, und wobei die Berechnung der Route (R) innerhalb des bevorzugten Routenkorridors (K1, K2) frei von der Position der verschiebbaren Markierung (P) erfolgt.

13. Navigationssystem nach Anspruch 12, **dadurch gekennzeichnet, dass** das Navigationssystem eine kombinierte Ein-/Ausgabeeinheit aufweist.

14. Navigationssystem nach Anspruch 13, **dadurch gekennzeichnet, dass** die kombinierte Ein-/Ausgabeeinheit als berührungsempfindlicher Bildschirm ausgebildet ist.

15. Navigationssystem nach einem der Ansprüche 12-14, **dadurch gekennzeichnet, dass** das Navigationssystem ein Lesegerät für auf einem Massenspeichermedium, insbesondere einer CD-ROM oder einer DVD, abgespeicherte Kartendaten enthält.

16. Navigationssystem nach einem der Ansprüche 12-15, **dadurch gekennzeichnet, dass** das Navigationssystem ein Empfangsmodul zum Empfang von drahtlos von einer externen Station übertragenen Kartendaten aufweist.

## Claims

1. Method for determining a route for a motor vehicle between a first and a second location using a route calculation device, particularly a motor vehicle navigation system, having a visual output unit (3) for presenting a map, wherein
- the visual output unit (3) is used to display a map, which contains the first and second locations (S, Z), and a marker (P) which can be moved by means of an input unit (2),
- a preferred rouse corridor (K1, K2) for route calculation is stipulated which encompasses the position of the movable marker (P),
- the route (R) between the first and second locations (S, Z) is calculated on the basis of the preferred route corridor (K1, K2), and the route calculation within the preferred route corridor (K1, K2) takes place freely from the position of the movable marker (P).

2. Method according to Claim 1, **characterized in that** the map contains road segments which have associated prescribed resistance values and **in that** the resistance values of road segments within the preferred route corridor (K1, K2) are reduced for the route calculation.

3. Method according to Claim 2, **characterised in that** a factor can be selected for reducing the resistance value.

4. Method according to one of the preceding claims, **characterized in that** the preferred route corridor (K1, K2) is stretched between the first location (S) and the marker (P) and also between the second location (Z) and the marker (P).

5. Method according to one of the preceding claims, **characterized in that** first of all a rectilinear connecting line (V) between the first and second locations (S, Z) is presented on the visual output unit (3), said connecting line containing the marker (P) and being able to be deformed by moving the marker (P).

6. Method according to Claim 5, **characterized in that** the connecting line (V) is deformed such that a first rectilinear line section (T1) is stretched between the first location (S) and the marker (P), and a second rectilinear line section (T2) is stretched between the marker (P) and the second location (Z).

7. Method according to Claim 6, **characterized in that** the connecting line (V) and the two line sections (T1, T2) form an isosceles triangle,

8. Method according to one of Claims 6 and 7, **characterized in that** the preferred route corridor (K1, K2) comprises a geographical area which has boundary lines (B) running symmetrically with respect to the line sections (T1, T2).

9. Method according to Claim 8, **characterized in that** the preferred route corridor (K1, K2) comprises a geographical area with boundary lines (B) running essentially parallel at a prescribed distance from the line sections (T1, T2).

10. Method according to Claim 9, **characterized in that** the distance ε between the boundary lines (B1, B2; B3, B4) of the preferred route corridor (K1, K2) which run parallel to a line section (T1, T2) is selectable.

11. Method according to one of the preceding claims, **characterized in that** the preferred route corridor (K1, K2) comprises a circular geographical area around the marker (P).

12. Navigation system for a motor vehicle having
- a computation unit (CPU 1) for calculating a route between a first and a second location (S, Z) using map data,
- an input unit (2) connected to the computation unit (CPU 1),
- a visual output unit (3) which is connected to the computation unit (CPU 1) and which can be used to present a may containing the first and second locations (S, Z),
- means for selecting a preferred route corridor (K1, K2), wherein the preferred route corridor can be determined by means of the input unit (2) by moving a marker (P) displayed on the display unit (3) and encompasses the position of said marker, wherein the route (R) within the preferred route corridor (K1, K2) is calculated freely from the position of the movable marker (P).

13. Navigation system according to Claim 12, **characterized in that** the navigation system has a combined input/output unit.

14. Navigation system according tao Claim 13, **characterized in that** the combined input/output unit is in the form of a touch-sensitive screen.

15. Mavigation system according to one of Claims 12-14., **characterized in that** the navigation system contains a reader for map data stored on a mass storage medium, particularly a CD-ROM or a DVD.

16. Navigation system according to one of claims 12-15, **characterized in that** the navigation system has a reception module for receiving map data transmitted wirelessly by an external station.

## Revendications

1. Procédé permettant de déterminer, au moyen d'un dispositif de calcul d'itinéraires, notaient au moyen d'un système de navigation pour véhicule automobile, un itinéraire pour un véhicule automobile entre une première localité et une deuxième localité, ledit système comportant une unité optique d'édition (3) permettant de représenter une carte géographique, où
- une carte, qui comprend la première localité et la deuxième localité (S, Z), est affichée sur l'unité optique d'édition (3), accompagnée d'un repère (P) pouvait être déplacé au moyen d'une unité de saisie (2),
- un corridor d'itinéraire préférentiel (K1, K2) est défini pour un calcul d'itinéraire, ledit corridor comprenant la position du repère (P) déplaçable,
- l'itinéraire (R) entre la première localité et la deuxième localité (S, Z) est calculé en tenant compte du corridor d'itinéraire préférentiel (K1, K2) et le calcul de l'itinéraire à l'intérieur du corridor d'itinéraire préférentiel (K1, K2) est exécuté indépendamment de la position du repère déplaçable (P).

2. Procédé selon la revendication 1, **caractérisé par le fait que** la carte renferme des sections de routes auxquelles sont affectées des valeurs données de résistance de trajet et que les valeurs de résistance de sections de routes sont diminuées à l'intérieur du corridor d'itinéraire préférentiel (K1, K2) pour le calcul d'itinéraires.

3. Procédé selon la revendication 2, **caractérisé par le fait qu**'un facteur peut être sélectionné pour la diminution de la valeur de la résistance du trajet.

4. Procédé selon l'une des revendications précédentes, **caractérisé par le fait que** le corridor d'itinéraire préférentiel (K1, K2) s'étend entre la première localité (S) et le repère (P), ainsi qu'entre la deuxième localité (Z) et le repère (P).

5. Procédé selon l'une des revendications précédentes, **caractérisé par le fait qu**'un trait de liaison rectiligne (V) entre la première localité et la deuxième localité (S, Z) est d'abord représenté sur l'unité optique d'édition (3), lequel trait de Liaison comprend le repère (P) et est déformée par déplacement du repère (P).

6. Procédé selon la revendication 5, **caractérisé par le fait que** la déformation de la liaison (V) est réalisée **par le fait qu'**un premier segment, rectiligne (TI) relie la première localité (S) et le repère (P) et un deuxième segment rectiligne (T2) relie le repère (P) et la deuxième localité (Z).

7. Procédé selon la revendication 6, **caractérisé par le fait que** le trait de liaison (V) et les deux segments (T1, T2) forment un triangle isocèle.

8. Procédé selon l'une des revendications 6 ou 7, **caractérisé par le fait que** le corridor d'itinéraire préférentiel (K1, K2) comprend une région géographique qui a des limites (B) symétriques par rapport aux segments (T1, T2).

9. Procédé selon la revendication 8, **caractérisé par le fait que** le corridor d'itinéraire préférentiel (K1, K2) comprend une région géographique qui a des limites (B) essentiellement parallèles aux segments (T1, T2) à une distance donnée de ceux-ci.

10. Procédé selon la revendication 9, **caractérisé par le fait qu'il** est possible de choisir l'écartement ε entre les limites (B1, B2; B3, B4) du corridor d'itinéraire préférentiel (K1, K2) parallèles à un segment (T1, T2).

11. Procédé selon l'une des revendications précédentes, **caractérisé par le fait que** le corridor d'itinéraire prérérentiel (K1, K2) comprend une région géographique circulaire autour du repère (P),

12. Système de navigation, pour véhicule automobile, comportant:
- une unité de calcul (CPU 1) permettant, sur la base de données cartographiques, le calcul d'un itinéraire entre une première localité et une deuxième localité (S, Z),
- une unité de saisie (2) reliée à l'unité de calcul (CPU 1),
- une unité optique d'édition (3) reliée à l'unité de calcul (CPU 1) et sur laquelle il est possible de représenter une carte géographique comprenant la première localité et la deuxième localité (S, Z),
- des moyens permettant de sélectionner un corridor d'itinéraire préférentiel (K1, K2), ledit corridor d'itinéraire préférentiel pouvant être déterminé au moyen de l'unité de saisie (2) en déplaçant un repère (P) affiché 4; sur l'unité optique d'édition (3) et dont la position est comprise dans le corridor d'itinéraire préférentiel et le calcul de l'itinéraire (R) se faisant à l'intérieur du corridor d'itinéraire préférentiel (K1, K2) indépendamment de la position du repère déplaçable (P).

13. Système de navigation selon la revendication 12, **caractérisé par le fait que** le système de navigation comporte une unité combinée d'entrée es sortie.

14. Procédé selon la revendication 13, **caractérisé par le fait que** l'unité combinée d'entrée et sortie est conçue sous forme d'écran tactile.

15. Procédé selon l'une des revendications 12 à 14, **caractérisé par le fait que** le système de navigation comprend un lecteur de données cartographiques mémorisées sur un support de mémoire de masse, notamment, sur un disque CD-ROM ou un disque DVD.

16. Procédé selon l'une des revendications 12 à 15, **caractérisé par le fait que** le système de navigation comporte un module de réception permettant de capter sans fil des données cartographiques transmises par une station extérieure.
